# EUROPÄISCHE PATENTSCHRIFT

(11) **EP 1 353 085 B1**
(45) Veröffentlichungstag und Bekanntmachung des Hinweises auf die Patenterteilung: **28.06.2006**
(21) Anmeldenummer: 03007951.1
(22) Anmeldetag: 09.04.2003
(51) Int. Cl.: F16F 9/36

(54) **Dichtungsanordnung, insbesondere eines Luftfedersystems**
Sealing arrangement, in particular for an air spring system
Dispositif d'étanchéité, en particulier pour un système à ressort pneumatique

(30) Priorität: 09.04.2002 DE 10215492
(43) Veröffentlichungstag der Anmeldung: 15.10.2003
(73) Patentinhaber: Busak + Shamban GmbH, 70565 Stuttgart (DE)
(72) Erfinder: Jordan, Holger, 73765 Neuhausen a.d.F. (DE)
(74) Vertreter: Kohler Schmid Möbus

(56) Entgegenhaltungen:
- EP-A- 0 637 702
- DE-A- 2 341 350
- US-A- 4 108 287
- US-A- 4 655 438
- US-A- 5 009 401

## Beschreibung

Die Erfindung betrifft eine Dichtungsanordnung, insbesondere eines Luftfedersystems, zum Abdichten eines ersten geschlossenen Druckraums mit einem ersten Medium gegen einen zweiten geschlossenen Druckraum mit einem zweiten vom ersten Medium unterschiedlichen Medium, wobei das erste und das zweite Medium einen mit mindestens einem Vorspannelement vorgespannten Dichtungsring über einen abzudichtenden Spalt zwischen zwei konzentrischen gegeneinander beweglichen Maschinenbauteilen druckbeaufschlagen.

Ein Luftfedersystem, das einen ersten geschlossenen Druckraum und einen zweiten geschlossenen Druckraum aufweist, ist durch die DE 198 26 480 bekannt geworden.

Bei dem bekannten Luftfedersystem werden, wie auch bei anderen bekannten Systemen, die bewegliche Kolbenstange, die in den zweiten und in den ersten Druckraum hineinragt, über eine Dichtungsanordnung abgedichtet, die in der Regel aus einem Dichtungsring, der unmittelbar an der Außenoberfläche der Kolbenstange anliegt, und einem Vorspannelement, über das der Dichtungsring vorgespannt ist, besteht. Die bekannte Dichtungsanordnung hat die Aufgabe, zwei unterschiedliche unter Druck stehende Medien bei unterschiedlichsten Belastungen der Druckräume sicher zu trennen. Diese bekannten Luftfedersysteme sind nicht nur plötzlichen großen Druckschwankungen bzw. Druckstößen ausgesetzt, sondern auch großen Temperaturschwankungen. Die Temperaturschwankungen treten dann auf, wenn derartige Luftfedersysteme beispielsweise in Kraftfahrzeugen eingesetzt werden, die der Witterung in den unterschiedlichen Jahreszeiten ausgesetzt sind. Temperaturschwankungen von 70°C sind möglich, so dass an die Materialien, die für solche Dichtungsanordnungen eingesetzt werden, große Anforderungen gestellt werden. Den Temperaturschwankungen überlagert sind veränderbare Drücke, zum Beispiel kann der Luftpolsterdruck im zweiten Druckraum erhöht oder abgesenkt werden. Erfolgen Luftpolsterdruckerhöhungen unter ungünstigen Bedingungen, so kann es zu einer Fehlfunktion der bekannten Dichtungsanordnung kommen.

Auch die US,665,438 offenbart eine Dichtungsanordnung eines Luftfedersystems zum Abdichten eines ersten Druckraums mit einem ersten Medium gegen einen zweiten Druckraum mit einem zweiten Medium, wobei das erste und das zweite Medium einen Dichtungsring über einen abzudichtenden Spalt zwischen zwei konzentrisch gegeneinander beweglichen Maschinenbauteilen druckbeaufschlagen.

Aufgabe der Erfindung ist es deshalb, die Sicherheit und die Funktionstüchtigkeit derartiger Systeme auch unter ungünstigen Druck- und/oder Temperaturbedingungen zu erhöhen.

Diese Aufgabe wird erfindungsgemäß dadurch gelöst, dass zwischen dem zweiten Druckraum und einem Nutraum, in dem die Dichtungsanordnung mit dem Dichtungsring und dem mindestens einen Vorspannelement angeordnet ist, eine drucktechnische Verbindung im Bereich der Vorspannelemente im Nutgrund und/oder mindestens einer Nutflanke vorgesehen ist.

Diese erfindungsgemäße Ausgestaltung hat den Vorteil, dass sich die Anpresskraft des Dichtungsrings an der Außenoberfläche des abzudichtenden Maschinenbauteils, hier Kolbenstange, direkt proportional zum anstehenden Druck im zweiten Druckraum verhält. Die Flexibilität der Dichtungsanordnung wird nicht nur alleine durch die Auswahl des oder der Vorspannelemente bestimmt, sondern auch durch die augenblickliche Belastung des gesamten Systems. Konstand niedere Reibungswerte zwischen der Dichtungskante des Dichtungsringes und der abzudichtenden beweglichen Außenoberfläche, an der der Dichtungsring anliegt, sind möglich. Extreme Druck- und/oder Temperaturschwankungen können die erfindungsgemäße Anordnung nicht mehr beeinträchtigen, weil ein Fehlverhalten, hervorgerufen durch temperaturabhängige Materialeigenschaften des oder der Vorspannelemente, durch eine Druckveränderung unmittelbar auf das oder die Vorspannelemente durch das zweite Medium ausgeglichen wird.

Erfindungsgemäß sind das oder die Vorspannelemente und somit auch der Dichtungsring von einem Medium aus einem zweiten Druckraum druckbeaufschlagt, der keine drucktechnische Verbindung zum ersten Druckraum aufweist. Der zweite Druckraum ist mit Luft und der erste Druckraum ist mit Öl befüllt. Eine dauerhafte Trennung der unter Druck stehenden Medien an der Wellendurchführung oder der Kolbenstange im Bereich der Dichtungsanordnung ist gesichert.

Der Dichtungsring der erfindungsgemäßen Dichtungsanordnung ist bevorzugt aus einem zähelastischen Material gefertigt, insbesondere aus PTFE (Polytetrafluorethylen). Mit einem derartigen Dichtungsring sind über lange Zeiträume niedrige Reibungswerte zu verwirklichen.

Das Vorspannelement kann auch als elastische Scheibe ausgebildet sein, die den Dichtungsring abdeckt und die drucktechnische Verbindung kann über den abzudichtenden Spalt erfolgen.

Bevorzugt steht das zweite Medium an mindestens einem Vorspannelement über einen Durchbruch, einen Kanal oder eine Durchgangsbohrung, die vom zweiten Druckraum ausgeht, an. Dies hat den Vorteil, dass mit einem geringen Aufwand die erfindungsgemäße drucktechnische Verbindung zwischen dem zweiten Druckraum und dem Nutraumbereich mit den Vorspannelementen verwirklicht werden kann.

In weiterer Ausgestaltung der Erfindung sind der Dichtungsring und das mindestens eine Vorspannelement derart aufeinander abgestimmt, dass, unabhängig von der Druckhöhe des ersten und zweiten Mediums, die Kontaktpressungsverteilung des Dichtungsrings an dem unmittelbar über eine oder mehrere Dichtungskanten anliegenden Maschinenbauteil konstant bleibt. Dies hat den Vorteil, dass das Leckageverhalten des gesamten Systems klein ist. Es findet kein wesentlicher Medienaustausch statt.

In weiterer bevorzugter Ausgestaltung der Erfindung ist das mindestens eine Vorspannelement aus zwei elastischen Spannringen gebildet. Dies hat den Vorteil, dass entweder zwei gleiche Spannringe oder aber auch zwei unterschiedliche Spannringe gleichzeitig eingesetzt werden können. Unterschiedliche, beispielsweise gummielastische Materialien, üben im Zusammenspiel eine unterschiedliche Kraft oder eine unterschiedlichere Kräfteverteilung auf den angrenzenden Dichtungsring aus als zwei gleiche Spannringe. Entscheidend für das Funktionsverhalten der Dichtungsanordnung ist es auch, ob das zweite Medium nur an einem Spannring oder an beiden Spannringen ansteht. Über unterschiedliche Spannringgrößen lassen sich, in Abhängigkeit vom Druck des zweiten Mediums im Nutraum, unterschiedliche starke Verschiebungen und/oder Verkeilungen der Spannringe erzielen, die ihre Lageveränderung bzw. Deformation auf den angrenzenden Dichtungsring übertragen, der dadurch mit einer unterschiedlichen Pressungsverteilung an der Welle oder der Kolbenstange anliegt. Durch eine in Abhängigkeit des Drucks des zweiten Mediums stattfindende Verkippung des einen oder des anderen Spannrings lassen sich weitere Vorspanneffekte erzielen, die das gesamte System betriebssicherer gestalten.

Beispielsweise können bei mehreren Spannringen dem Nutgrund zugewandt ein kälteflexibler Spannring eingesetzt werden, an den ein wärmestabilisierter innerer Spannring grenzt. Dies hat den Vorteil, dass bei größeren Temperaturschwankungen immer ein Spannring seine volle Funktionstüchtigkeit beibehält. Weisen die Spannringe eine unterschiedliche Größe auf, so kann damit für das ganze System eine größere Elastizität erreicht werden. Unterschiedliche Verschiebemechanismen unter Druck finden statt, und es erfolgt eine unterschiedliche Radialkrafteinleitung auf den Dichtungsring.

In weiterer Ausgestaltung kann der Nutraum eine unterschiedliche Querschnittsform aufweisen. Rechtwinklige Nutraumformen sind nicht zwingend, so dass mit unterschiedlichen Nutraumformen in Verbindung mit in diese Nuträume eingebrachten Spannringen eine gezielte Belastung des angrenzenden Dichtungsrings erreicht werden kann (gesteuertes Abdichtungsverhalten).

Die erfindungsgemäße Dichtungsanordnung wird bevorzugt an zwei konzentrischen gegeneinander beweglichen Maschinenbauteilen eingesetzt, bei denen das eine erste Bauteil als Dämpfer ausgebildet ist und einen Nutraum aufweist, und das andere Maschinenbauteil als zweites Bauteil eine Kolbenstange ist, wobei die Kolbenstange einenends mit einem Federbalg bzw. einem Federgehäuse fest verbunden ist, der bzw. das mit Druckmedium gefüllt ist und den zweiten Druckraum bildet und dass die Kolbenstange mit dem anderen Ende im Dämpfer verschieblich geführt ist, der mit einer hydraulischen Flüssigkeit, wie Öl, befüllt ist und den ersten Druckraum bildet.

Dies hat den Vorteil, dass die erfindungsgemäße Dichtungsanordnung besonders vorteilhaft bei Luftfedersystemen eingesetzt werden kann, die extremen Beanspruchungen in unterschiedlichsten Bereichen ausgesetzt sind. Die Luftfedersysteme mit der erfindungsgemäßen Dichtungsanordnung sind langlebiger, wartungsärmer und trennen über lange Zeiträume sicher zwei unterschiedliche Medien in unterschiedlichen geschlossenen Druckräumen.

Weitere Vorteile ergeben sich aus der Beschreibung und der beigefügten Zeichnung. Ebenso können die vorstehend genannten und die noch weiter aufgeführten Merkmale erfindungsgemäß jeweils einzeln oder in beliebigen Kombinationen miteinander verwendet werden. Die jeweilige erwähnte Ausführungsform ist nicht als abschließende Ausführungsform zu verstehen, sondern hat vielmehr beispielhaften Charakter. Es zeigt:
Fig. 1 eine erfindungsgemäße Dichtungsanordnung in einem stark schematisierten Luftfedersystem, wie es beispielsweise als Luftfederbein für Radaufhängungen von Kraftfahrzeugen eingesetzt werden kann;
Fig. 2 eine zweite Ausführungsform einer erfindungsgemäßen Dichtungsanordnung, wie sie zur Abdichtung von zwei geschlossenen Druckräumen eingesetzt werden kann, die über eine Welle oder eine Kolbenstange miteinander in Verbindung stehen;
Fig. 3 eine dritte Ausführungsform einer erfindungsgemäßen Dichtungsanordnung;
Fig. 4 eine vierte Ausführungsform der erfindungsgemäßen Dichtungsanordnung;
Fig. 5 eine fünfte Ausführungsform der erfindungsgemäßen Dichtungsanordnung;
Fig. 6 eine sechste Ausführungsform einer erfindungsgemäßen Dichtungsanordnung;
Fig. 7 eine siebte Ausführungsform einer erfindungsgemäßen Dichtungsanordnung;
Fig. 8 eine achte Ausführungsform einer erfindungsgemäßen Dichtungsanordnung;
Fig. 9 eine neunte Ausführungsform einer erfindungsgemäßen Dichtungsanordnung.

Die in den Fign. gezeigten Ausführungsformen sind nicht maßstäblich zu verstehen, und auch die dargestellten Proportionen, beispielsweise von einem Vorspannelement zu einem Dichtungsring, haben ausschließlich eine qualitative und keine quantitative Aussagekraft. Bei den verwendeten Materialien der Vorspannelemente handelt es sich vorzugsweise um gummielastische Materialien, und für die Dichtungsringe werden zähelastische Materialien bevorzugt.

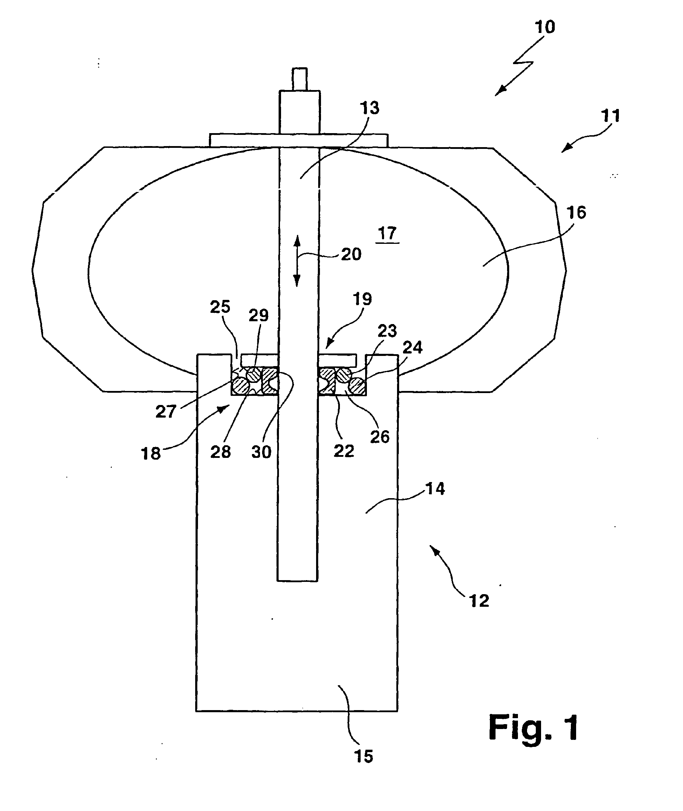

In Fig. 1 ist mit 10 ein stark schematisiertes Luftfedersystem angedeutet, das aus einem Luftfederbalg 11 und einem Dämpfer 12 gebildet ist. Der Luftfederbalg 11 kann auch ein Luftfedergehäuse zusätzlich aufweisen. Zwischen dem Luftfederbalg 11 und dem Dämpfer 12 ist eine Kolbenstange 13 verschieblich geführt, die von einem ersten Druckraum 14 mit einem ersten Medium 15, Öl, in einen zweiten Druckraum 16 ragt, der mit einem zweiten Medium 17, Luft, gefüllt ist. Die geschlossenen Druckräume 14, 16 werden im Bereich der Durchführung der Kolbenstange 13 mit einer Dichtungsanordnung 18 abgedichtet, die einen Spalt 19 fluiddicht verschließt, wenn die Kolbenstange 13 in Pfeilrichtungen 20 bewegt wird.

Der Luftfederbalg 11 kann unter Bewegung der Kolbenstange 13 deformiert werden, oder, sofern es sich um ein Luftfedergehäuse handelt, rollt sich ein sich an das Luftfedergehäuse anschließender Luftfederbalg an der Außenoberfläche des Dämpfers 12 ab, wenn sich die Kolbenstange 13 verschiebt.

Auf der Außenoberfläche der Kolbenstange 13 ist eine Dichtungsring 22 angeordnet, der über ein erstes Vorspannelement 23 und ein zweites Vorspannelement 24 druckbeaufschlagt ist. Über eine Öffnung 25, die als Durchgangsöffnung oder als Durchbruch zum zweiten Druckraum 16 ausgebildet ist, liegt das zweite Druckmedium 17 unmittelbar an den beiden Vorspannelementen 23, 24 an. Die Dichtungsanordnung 18 wird in einem Nutraum 26 gehalten, der im Dämpfer 12 ausgebildet ist.

Die Vorspannelemente 23, 24 liegen an einem Nutgrund 27, an einer ersten Nutflanke 28 und an einer zweiten Nutflanke 29 an. Die Öffnung 25 mündet in den Nutraum 26 im Bereich des Nutgrunds 27 und durchdringt dabei vollkommen die zweite Nutflanke 29. Über eine Dichtungskante 30 liegt der Dichtungsring 22 auf der Außenoberfläche der Kolbenstange 13 an.

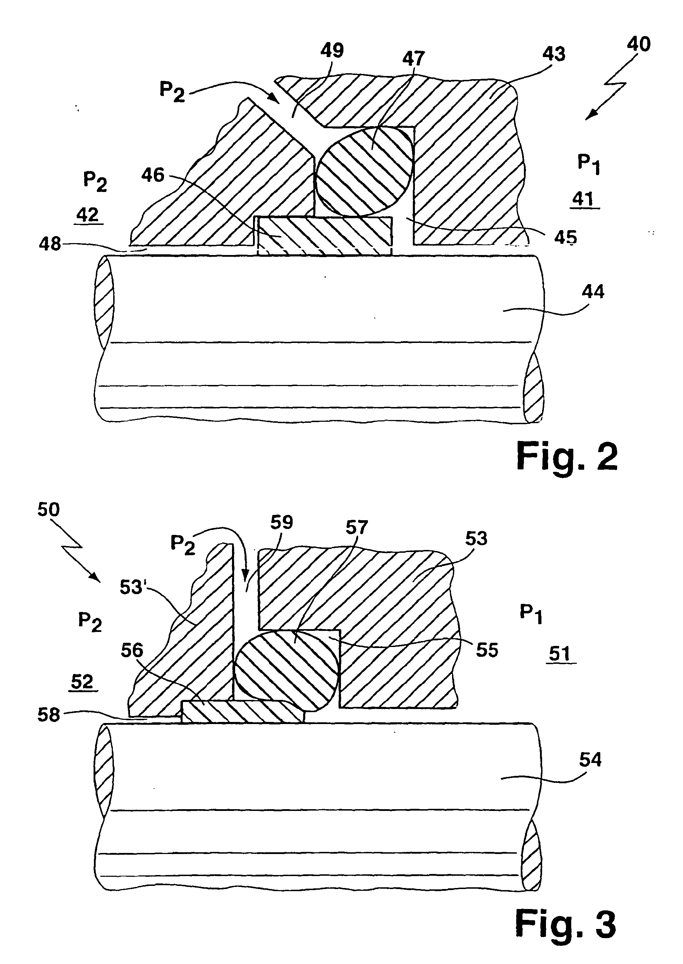

Fig. 2 zeigt eine weitere Ausführungsform einer Dichtungsanordnung 40, wie sie beispielsweise zur Abdichtung eines Luftfedersystems eingesetzt werden kann. Mit dem Bezugszeichen 41 ist ein erster Druckraum P₁ (Öl) bezeichnet und mit dem Bezugszeichen 42 ein zweiter Druckraum P₂ (Luft). In einem ersten ortsfesten Bauteil 43 ist einem zweiten beweglichen Bauteil 44 gegenüberliegend ein Nutraum 45 ausgebildet. Bei dem zweiten Bauteil 44 handelt es sich um eine Welle oder um eine Kolbenstange, die rotatorische und/oder translatorische Bewegungen durchführen.

In dem Nutraum 45 ist ein Dichtungsring 46 angeordnet, der über einen Spannring 47 vorgespannt ist. Der Dichtungsring 46 ist bevorzugt aus einem zähelastischen Material gefertigt und der Spannring 47 aus einem gummielastischen Material. Der Spannring 47 weist im belastungsfreien Zustand eine Querschnittsgröße auf, die größer ist als der Nutraumbereich, in den der Spannring 47 eingelegt ist. Deshalb wird der Dichtungsring 46 auch ohne Druckbelastung aus dem zweiten Druckraum 42 vorgespannt. Der vorgespannte Dichtungsring 46 liegt über eine Dichtungskante auf der Außenoberfläche des zweiten Bauteiles 44 auf und verschließt einen Spalt 48 fluiddicht, der den ersten Druckraum 41 mit dem zweiten Druckraum 42 verbindet. Über eine Durchgangsöffnung 49, die im Bereich des Nutgrundes in den Nutraum 45 einmündet, kann das im zweiten Druckraum 42 befindliche Medium, ein Gas, auf den Spannring 47 drücken.

Fig. 3 zeigt in einer weiteren Ausführungsform eine Dichtungsanordnung 50, die einen ersten Druckraum 51 von einem zweiten Druckraum 52 trennt. Der erste Druckraum 51 ist mit P₁ bezeichnet und ist mit Öl befüllt. Der zweite Druckraum 52, (P₂) ist mit Luft befüllt. Ein erstes Bauteil 53, das ortsfest ausgebildet ist, steht einem zweiten Bauteil 44, einer beweglichen Welle, Kolbenstange gegenüber. In dem ersten Bauteil 53 ist ein Nutraum 55 ausgebildet, der einen Dichtungsring 56 und einen Spannring 57 aufnimmt. Mit dem Dichtungsring 56 wird ein Spalt 58 zwischen den Bauteilen 53, 54 abgedichtet. Über eine Durchgangsöffnung 59 strömt das unter Druck stehende Medium aus dem zweiten Druckraum 52 auf den Spannring 57. Mit der Anordnung in Fig. 3 kann unter Anstehung des Drucks aus dem zweiten Druckraum 52 auf den Spannring 57 eine veränderte Pressungsverteilung am Dichtungsring 56 unter Belastung erreicht werden.

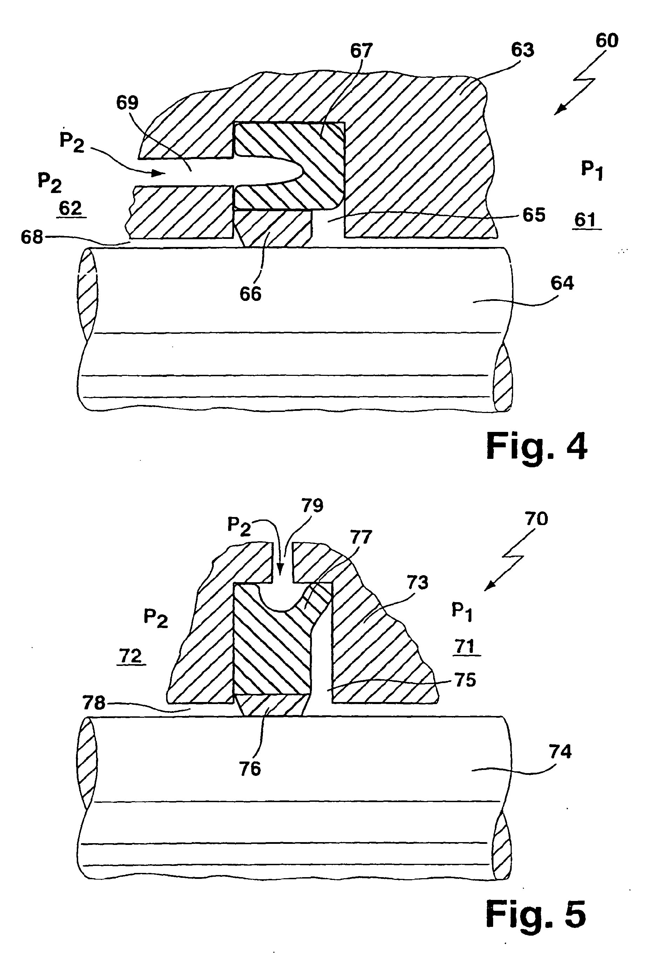

Fig. 4 zeigt mit 60 eine weitere Ausführungsform einer Dichtungsanordnung, die einen ersten Druckraum 61 (P₁) von einem zweiten Druckraum 62 (P₂) trennt. Ein erstes Bauteil 63 ist von einem zweiten Bauteil 64 beanstandet. In dem ersten Bauteil 63 ist ein Nutraum 65 ausgebildet, der einen Dichtungsring 66 und einen Spannring 67 aufnimmt. Über den Spannring 67 ist der Dichtungsring 66 vorgespannt und dichtet einen Spalt 68 zwischen dem ortsfesten Bauteil 63 und dem beweglichen Bauteil 64 ab. Über einer Durchgangsöffnung 69 steht das unter Druck stehende Medium aus dem Druckraum 62 an dem Spannring 67 an und kann in Abhängigkeit des Druckes (P₂) den Spannring 67 und damit die gesamte Dichtungsanordnung 60 unterschiedlich druckbeaufschlagen.

Fig. 5 zeigt in einer weiter vereinfachten Form eine Dichtungsanordnung 70, die einen ersten Druckraum 71 von einem zweiten Druckraum 72 trennt. Ein erstes ortsfestes Bauteil 73 liegt einem zweiten beweglichen Bauteil 74 gegenüber. In dem ersten Bauteil 73 ist ein Nutraum 75 ausgebildet, der einen Dichtungsring 76 und einen Spannring 77 aufnimmt. Der Dichtungsring 76 liegt unter Vorspannung am zweiten Bauteil 74 an und verschließt einen Spalt 78. Über eine Durchgangsöffnung 79, die in den Nutgrund des Nutraumes 75 mündet, steht das unter Druck stehende Medium aus dem zweiten Druckraum 72 am Spannring 77 an. Verändert sich P₂, so verändert sich auch die Pressungsverteilung am Dichtungsring 76.

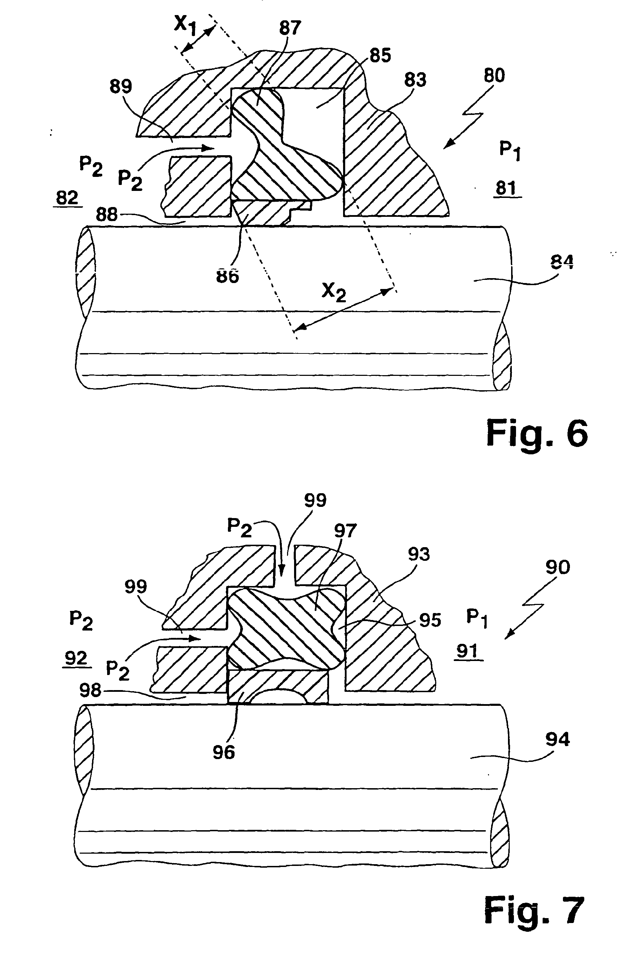

Fig. 6 zeigt in einer weiteren Ausführungsform der Erfindung eine Dichtungsanordnung 80, die einen ersten Druckraum 81 von einem zweiten Druckraum 82 trennt. Ein erstes ortsfestes Bauteil 83 ist von einem zweiten beweglichen Bauteil 84 beanstandet. Im ersten Bauteil 83 ist ein rechteckförmiger Nutraum 85 ausgebildet, in den ein Dichtungsring 86 und ein Spannring 87 eingelegt ist. Der gummielastische Spannring 87 weist im oberen, dem Nutgrund zugewandten Bereich eine Breite X₁ und im unteren, am Dichtungsring 86 anliegenden Bereich, eine Breite X₂ auf. X₂ ist größer als X₁. Ein Spalt 88 zwischen den Bauteilen 83, 84 wird durch die Dichtungsanordnung 80 abgedichtet. Über eine Durchgangsöffnung 89 kann ein unter Druck stehendes Medium (Luft) aus dem zweiten Druckraum 82 auf den Spannring 87 strömen, und je nach Druckhöhe kann sich der Spannring 87 im Nutraum 85 verlagern, verkippen.

Fig. 7 zeigt eine erfindungsgemäße Dichtungsanordnung 90 zur Abtrennung eines ersten Druckraums 91 von einem zweiten Druckraum 92. Ein erstes ortsfestes Bauteil 93 ist von einem zweiten beweglichen Bauteil 94 beanstandet. Ein im ersten Bauteil 93 ausgebildeter Nutraum nimmt einen Dichtungsring 96 und einen Vierlippendichtring 97 auf, der vorgespannt im Nutraum 95 angeordnet ist. Mit dem Dichtungsring 96 und dem Vierlippendichtring 97 wird ein Spalt 98 zwischen den Bauteilen 93, 94 abgedichtet. Über Durchgangsöffnungen 99, die sowohl auf einer dem zweiten Druckraum 92 zugewandten Nutflanke wie auch im Nutgrund ausgebildet sind, strömt das unter Druck stehende Medium aus dem zweiten Druckraum 92 auf den Vierlippendichtring 97.

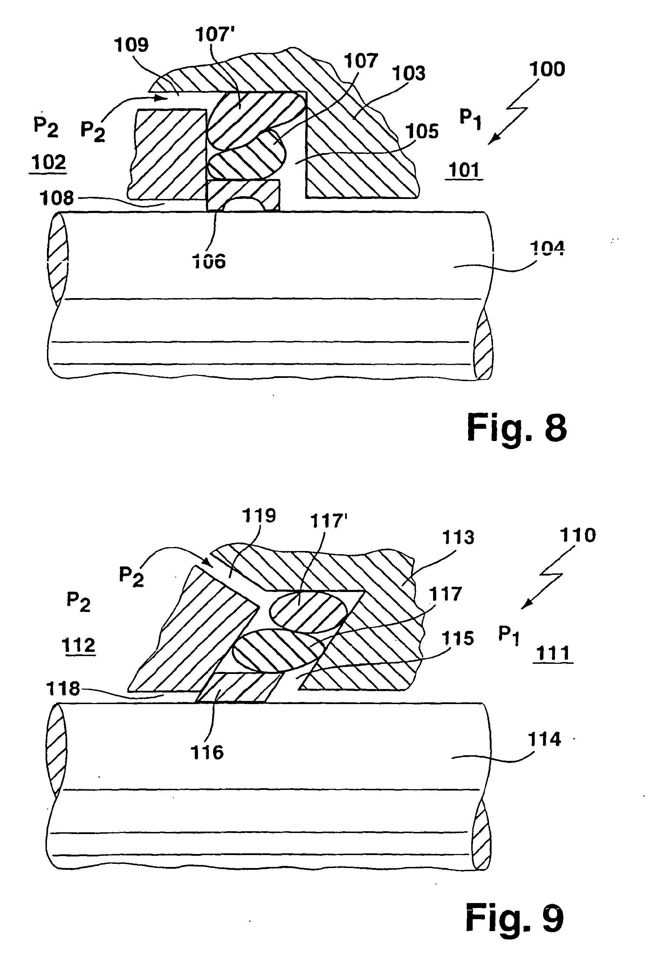

Fig. 8 zeigt in einem weiteren Ausführungsbeispiel einer Dichtungsanordnung 100, wie ein erster geschlossener Druckraum 101 gegenüber einem zweiten geschlossenen Druckraum 102 abgedichtet werden kann. Ein erstes ortsfestes Bauteil 103 liegt beanstandet einem beweglichen Bauteil 104 gegenüber. In dem ersten ortsfesten Bauteil 103 ist ein rechteckförmiger Nutraum 105 ausgebildet, der einen Dichtungsring 106 und einen ersten Spannring 107 und einen zweiten Spannring 107' aufnimmt. Mit der Dichtungsanordnung 100 wird ein Spalt 108 abgedichtet. Die Spannringe 107, 107' können im Querschnitt unterschiedlich groß sein und aus unterschiedlichen Materialien hergestellt sein. Der Spannring 107' kann kälteflexibler und der Spannring 107 wärmeflexibler sein. Je nach Anordnung der Spannringe 107, 107' und der Größe der Spannringe 107, 107' kann ein unter Druck stehendes Medium aus dem zweiten Druckraum 102 die Spannringe 107, 107' verlagern, verkippen, verkeilen und so eine unterschiedliche Pressungsverteilung am Dichtungsring 106 bewirken. Eine Durchgangsöffnung 109 vom zweiten Druckraum 102 zum Nutraum 105 ist im Bereich des Nutgrunds seitlich an der Nutflanke ausgebildet, die an den zweiten Druckraum 102 grenzt.

In Fig. 9 ist eine Dichtungsanordnung 110 gezeigt, die einen ersten Druckraum 111 gegenüber einem zweiten Druckraum 112 abdichtet. Ein erstes ortsfestes Bauteil 113 liegt einem zweiten beweglichen Bauteil 114 gegenüber. In dem ersten Bauteil 113 ist ein parallelogrammartiger Nutraum 115 ausgebildet, der einen Dichtungsring 116, einen ersten Spannring 117 und einen zweiten Spannring 117' aufnimmt. Mit der Dichtungsanordnung 110 wird ein Spalt 118 abgedichtet. Über eine Durchgangsöffnung 119 strömt ein unter Druck stehendes Medium aus dem zweiten Druckraum 112 auf die Spannringe 117, 117'. Abhängig von der Nutraumform, der Anzahl der Spannringe, der Größe der Spannringe, der Materialien der Spannringe und des Dichtungsrings kann in Abhängigkeit des anstehenden Druckes aus dem zweiten Druckraum die Pressungsverteilung des Dichtrings 116 an der Oberfläche des beweglichen Bauteiles 114 so ausgelegt werden, dass bei niedrigen Reibungswerten und einer niedereren Leckagerate eine dauerhafte Abdichtung zwischen den Druckräumen 111, 112 gewährleistet ist.

Ein erster geschlossener Druckraum 14 wird gegenüber einem zweiten geschlossenen Druckraum 16 abgedichtet, wobei in den Druckräumen 14, 16 unterschiedliche Medien gespeichert sind. Zwischen dem ersten Druckraum 14 und dem zweiten Druckraum 16 ist eine Verbindung über eine Kolbenstange 13 oder eine Welle geschaffen. Die Kolbenstange 13 bzw. die Welle ist beweglich zwischen den Druckräumen 14, 16 gelagert und über eine Dichtungsanordnung 18 abgedichtet. Die Vorspannelemente 23, 24 sind hydraulisch mit dem zweiten Druckraum verbunden.

## Patentansprüche

1. Dichtungsanordnung, insbesondere eines Luftfedersystems (10), zum Abdichten eines ersten geschlossenen Druckraums (14) mit einem ersten Medium (15) gegen einen zweiten geschlossenen Druckraum (16) mit einem zweiten vom ersten Medium (15) unterschiedlichen Medium (17), wobei das erste und das zweite Medium (15, 17) einen mit mindestens einem Vorspannelement (23, 24) vorgespannten Dichtungsring (22) über einen abzudichtenden Spalt (19) zwischen zwei konzentrischen gegeneinander beweglichen Maschinenbauteilen (12, 13) druckbeaufschlagen,
**dadurch gekennzeichnet,**
**dass** zwischen dem zweiten Druckraum (16) und einem Nutraum (26), in dem die Dichtungsanordnung (18) mit dem Dichtungsring (22) und dem mindestens einen Vorspannelement (23, 24) angeordnet ist, eine drucktechnische Verbindung im Bereich der Vorspannelemente (23, 24) als Öffnung im Nutgrund (27) und/oder mindestens einer Nutflanke (28, 29) vorgesehen ist.

2. Dichtungsanordnung nach Anspruch 1, **dadurch gekennzeichnet, dass** das zweite Medium (17) über einen Durchbruch (25), einen Kanal, oder eine Durchgangsbohrung vom zweiten Druckraum (16) an mindestens einem Vorspannelement (23, 24) ansteht.

3. Dichtungsanordnung nach Anspruch 1 oder 2, **dadurch gekennzeichnet, dass** als Vorspannelement ein Spannring im belastungsfreien Zustand eine Querschnittsgröße aufweist, die größer als der Nutraumbereich ist, in dem der Spannring eingelegt ist.

4. Dichtungsanordnung nach einem der Ansprüche 1 bis 3, **dadurch gekennzeichnet, dass** das mindestens eine Vorspannelement aus zwei elastischen Spannringen (23, 24) gebildet ist.

5. Dichtungsanordnung nach Anspruch 4, **dadurch gekennzeichnet, dass** die Spannringe (23, 24) aus unterschiedlichen Materialien bestehen.

6. Dichtungsanordnung nach einem der Ansprüche 1 bis 5, **dadurch gekennzeichnet, dass** das mindestens eine Vorspannelement (23, 24) unterschiedliche Querschnittsformen aufweist.

7. Dichtungsanordnung nach einem der Ansprüche 1 bis 6, **dadurch gekennzeichnet, dass** der Nutraum (26) unterschiedliche Querschnittsformen aufweist

8. Dichtungsanordnung nach einem der Ansprüche 1 bis 7, **dadurch gekennzeichnet, dass** die zwei konzentrischen gegeneinander beweglichen Maschinenbauteile aus einem ersten Bauteil, das als Dämpfer (12) ausgebildet ist und den Nutraum (26) aufweist, und einem zweiten Bauteil, das als Kolbenstange (13) ausgebildet ist, gebildet sind, wobei die Kolbenstange (13) mit einem Ende mit einem Federbalg fest verbunden ist, der mit Druckmedium befüllt ist und den zweiten Druckraum (16) bildet und dass die Kolbenstange (13) mit dem anderen Ende im Dämpfer (12) verschieblich geführt ist, der mit einer hydraulischen Flüssigkeit, wie Öl, befüllt ist und den ersten Druckraum (14) bildet.

## Claims

1. Sealing arrangement, in particular, of a pneumatic spring system (10), for sealing a first closed pressure space (14) comprising a first medium (15) against a second closed pressure space (16) comprising a second medium (17) being different from the first medium (15), wherein the first and the second medium (15, 17) pressurize a sealing ring (22) pretensioned by at least one pre-tensioning element (23, 24) over a gap (19) to be sealed between two concentric machine components (12, 13) being movable relative to each other,
**characterized in that**
a pressure-technical connection in the region of the pre-tensioning elements (23, 24) is provided as opening in the groove bottom (27) and/or at least one groove flank (28, 29) between the second pressure space (16) and a groove space (26) in which the sealing arrangement (18) with sealing ring (22) and the at least one pre-tensioning element (23, 24) are arranged.

2. Sealing arrangement according to claim 1, **characterized in that** the second medium (17) borders at least one pre-tensioning element (23, 24) via an aperture (25), a channel or a through hole of the second pressure space (16).

3. Sealing arrangement according to claim 1 or 2, **characterized in that** a tension ring, as pre-tensioning element, has a cross-sectional size in the unloaded state which is larger than the groove space region in which the tension ring is inserted.

4. Sealing arrangement according to any one of the claims 1 through 3, **characterized in that** the at least one pre-tensioning element is formed by two elastic tension rings (23, 24).

5. Sealing arrangement according to claim 4, **characterized in that** the tension rings (23, 24) are made from different materials.

6. Sealing arrangement according to any one of the claims 1 through 5, **characterized in that** the at least one pre-tensioning element (23, 24) has different cross-sectional shapes.

7. Sealing arrangement according to any one of the claims 1 through 6, **characterized in that** the groove space (26) has different cross-sectional shapes.

8. Sealing arrangement according to any one of the claims 1 through 7, **characterized in that** the two concentric machine components being movable relative to each other, are formed by a first component being formed as damper (12) and comprising the groove space (26), and by a second component formed as piston rod (13), wherein one end of the piston rod (13) is rigidly connected to a bellows which is filled with pressure medium and forms the second pressure space (16), and wherein the piston rod (13) is slidably guided with its other end in the damper (12) which is filled with a hydraulic liquid, such as oil, and forms the first pressure space (14).

## Revendications

1. Système d'étanchéité, en particulier un système pour amortisseur pneumatique (10), destiné à assurer l'étanchéité d'une première chambre de pression (14) fermée, contenant un premier fluide (15), par rapport à une deuxième chambre de pression (16) fermée, contenant un deuxième fluide (17) différent du premier fluide (15), le premier et le deuxième fluide (15, 17) exerçant une pression sur une bague d'étanchéité (22), précontrainte par au moins un élément de précontrainte (23, 24), par l'intermédiaire d'une fente (19) destinée à être rendue étanche entre deux pièces de machine (12, 13) concentriques, mobiles l'une par rapport à l'autre,
**caractérisé en ce que**, entre la deuxième chambre de pression (16) et un espace utile (26), dans lequel est agencé le système d'étanchéité (18) avec la bague d'étanchéité (22) et ledit au moins un élément de précontrainte (23, 24), il est prévu une liaison pressurisée dans la zone des éléments de précontrainte (23, 24) sous forme d'orifice dans le fond de rainure (27) et/ou dans au moins un flanc de rainure (28, 29).

2. Système d'étanchéité selon la revendication 1, **caractérisé en ce que** le deuxième fluide (17) est appliqué contre au moins un élément de précontrainte (23, 24) par l'intermédiaire d'un trou traversant (25), d'un canal ou d'une forure débouchante de la deuxième chambre de pression (16).

3. Système d'étanchéité selon la revendication 1 ou 2, **caractérisé en ce que** l'élément de précontrainte sous forme de bague de serrage a, à l'état non sollicité, une section qui est supérieure à celle de l'espace utile dans lequel est insérée la bague de serrage.

4. Système d'étanchéité selon l'une quelconque des revendications 1 à 3, **caractérisé en ce que** ledit au moins un élément de précontrainte est formé par deux bagues de serrage (23, 24) élastiques.

5. Système d'étanchéité selon la revendication 4, **caractérisé en ce que** les bagues de serrage (23, 24) sont réalisées dans des matériaux différents.

6. Système d'étanchéité selon l'une quelconque des revendications 1 à 5, **caractérisé en ce que** ledit au moins un élément de précontrainte (23, 24) a différentes formes de section.

7. Système d'étanchéité selon l'une quelconque des revendications 1 à 6, **caractérisé en ce que** l'espace utile (26) a différentes formes de section.

8. Système d'étanchéité selon l'une quelconque des revendications 1 à 7, **caractérisé en ce que** les deux pièces de machine concentriques, mobiles l'une par rapport à l'autre, sont formées par une première pièce, qui est conçue sous forme d'amortisseur (12) et comporte l'espace utile (26), et par une deuxième pièce, qui est conçue sous forme de tige de piston (13), la tige de piston (13) étant reliée fermement par une extrémité à un soufflet qui contient le fluide sous pression et forme la deuxième chambre de pression (16), et **en ce que** la tige de piston (13) est montée mobile avec l'autre extrémité dans l'amortisseur (12), qui contient un liquide hydraulique, tel que l'huile, et qui forme la première chambre de pression (14).
